# EUROPEAN PATENT APPLICATION

(11) **EP 2 975 741 A2**
(43) Date of publication of application: **20.01.2016**
(21) Application number: 15177518.6
(22) Date of filing: 20.07.2015
(51) Int. Cl.: H02K 9/00, H02K 9/19

(54) **ROTOR COOLING**

(30) Priority: 18.07.2014 US 201414335274
(71) Applicant: Hamilton Sundstrand Corporation, Charlotte, NC 28217 (US)
(72) Inventor: PAL, Debabrata, Hoffman Estates, IL 60195 (US)
(74) Representative: Hall, Matthew Benjamin

(57) **Abstract**

A rotor (104; 204) for an electrical machine (100; 200) includes a rotor core (106; 206) with a plurality of circumferentially spaced apart, axially extending wedges (108) mounted to the rotor core. A rotor sleeve (110) is mounted radially outboard of the rotor core. A respective flow channel (112) is defined between each wedge and the rotor sleeve for passage of coolant therethrough.

## Description

### BACKGROUND OF THE INVENTION

### 1. Field of the Invention

The present disclosure relates to electrical machines, and more particularly to cooling electrical machines.

### 2. Description of Related Art

Electrical machines such as motors and generators can require cooling in order to ensure a long service life. For example, high speed multi-pole rotor synchronous generators can include spray cooling systems aimed at cooling end turns in the rotor windings. There is a limit to how much heat can be removed by such techniques. Operation above such a limit can result in various heat induced damage, such as cracked pole tips and tumbling of rotor windings which can cause wire insulation break down.

Such conventional methods and systems have generally been considered satisfactory for their intended purpose. However, there is still a need in the art for improved rotor cooling in electrical machines. The present disclosure provides a solution for this need.

### SUMMARY OF THE INVENTION

A rotor for an electrical machine includes a rotor core with a plurality of circumferentially spaced apart, axially extending wedges mounted to the rotor core. A rotor sleeve is mounted radially outboard of the rotor core. A respective flow channel is defined between each wedge and the rotor sleeve for passage of coolant therethrough.

The rotor core can bound each flow channel circumferentially, for fluid isolation of the flow channels from one another in the circumferential direction. Rotor windings can be included between each wedge and the rotor core. The wedge can form a thermal conduction path for heat exchange between the rotor windings and the flow channel.

An electrical machine includes a housing and a rotor as described above mounted within the housing for rotation relative thereto. The rotor core can define an internal coolant passage for introduction of coolant, and a plurality of radial passages in fluid communication between the internal coolant passage and the flow channels for supplying coolant from the internal coolant passage to the flow channels. For example, a rotor shaft can be axially aligned with the rotor core, wherein the internal coolant passage is defined within the rotor shaft. A plurality of return passages can be in fluid communication between the flow channels and the internal coolant passage for return of coolant from the flow channels. It is also contemplated that a respective outlet can be defined at an end of each flow channel for passage of coolant out of the flow channel. A scavenge conduit can be included in fluid communication between a sump portion of the housing and the internal coolant passage. For example, the rotor can be configured to draw coolant from the sump portion through the scavenge conduit and into the flow channels by centrifugal force.

These and other features of the systems and methods of the subject disclosure will become more readily apparent from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below by way of example only and with reference to certain figures, wherein:
Fig. 1 is a schematic cross-sectional side-elevation view of an exemplary embodiment of an electrical machine constructed in accordance with the present disclosure, showing coolant passages in the rotor core;
Fig. 2 is a cross-sectional end elevation view of a portion of the electrical machine of Fig. 1, showing a sleeve disposed about the rotor core, providing flow passages for coolant;
Fig. 3 is a cross-sectional perspective view of the rotor of Fig. 2, showing the outlets of the flow channels proximate the end windings; and
Fig. 4 is a schematic cross-sectional side-elevation view of another exemplary embodiment of an electrical machine constructed in accordance with this disclosure, showing another exemplary coolant flow path.

### DETAILED DESCRIPTION OF THE PREFERRED EMBODIMENTS

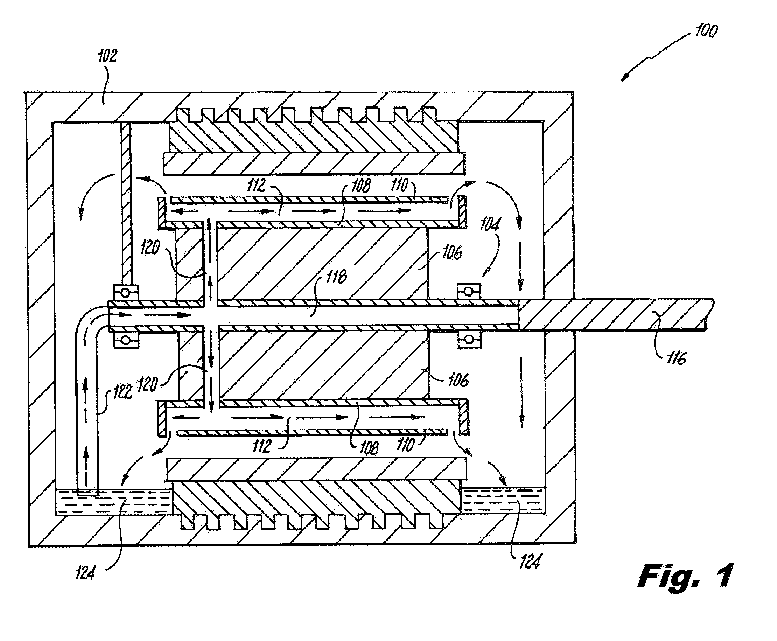

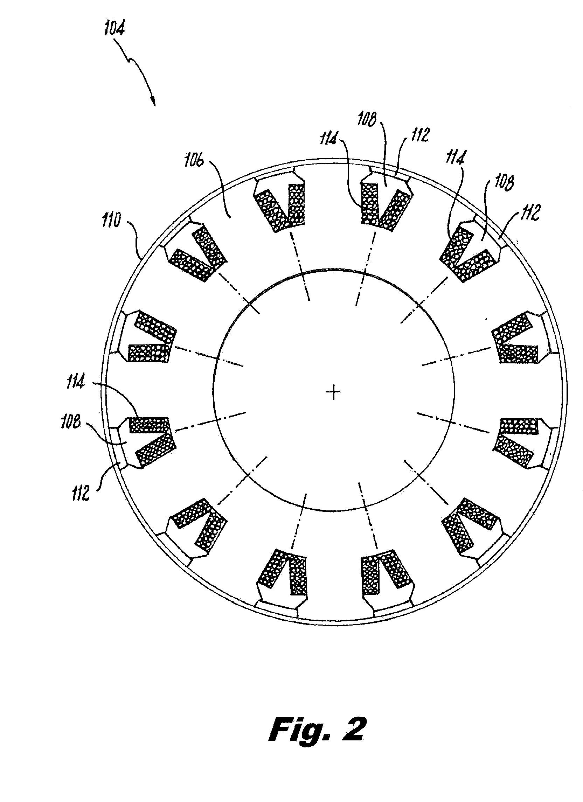

Reference will now be made to the drawings wherein like reference numerals identify similar structural features or aspects of the subject disclosure. For purposes of explanation and illustration, and not limitation, a partial view of an exemplary embodiment of an electrical machine in accordance with the disclosure is shown in Fig. 1 and is designated generally by reference character 100. Other embodiments of electrical machines in accordance with the disclosure, or aspects thereof, are provided in Figs. 2-4, as will be described. The systems and methods described herein can be used for cooling rotors in electrical machines.

Electrical machine 100 includes a housing 102 and a rotor 104 mounted within housing 102 for rotation relative thereto. Rotor 104 includes a rotor core 106 with a plurality of circumferentially spaced apart, axially extending wedges 108 mounted to rotor core 106. A rotor sleeve 110 is mounted radially outboard of rotor core 106. Sleeve 110 can provide protection for rotor core 106, e.g., sleeve 110 can provide support to rotor laminations for centrifugal forces. A respective flow channel 112 is defined between each wedge 108 and the rotor sleeve 110 for passage of coolant therethrough. It is contemplated that the coolant can be oil or any other suitable fluid.

With reference to Fig. 2, rotor core 106 bounds each flow channel in the circumferential direction, for fluid isolation of the flow channels 112 from one another in the circumferential direction. Rotor windings 114 are seated between each wedge 108 and rotor core 106. Coolant is inhibited or prevented from flowing between windings 114 as windings 114 are impregnated with resin or similar material to provide support and rigidity. Each wedge 108 forms a thermal conduction path for heat exchange between the respective rotor windings 114, where heat is generated, and the respective flow channel 112, where heat can be removed into coolant flowing in flow channel 112.

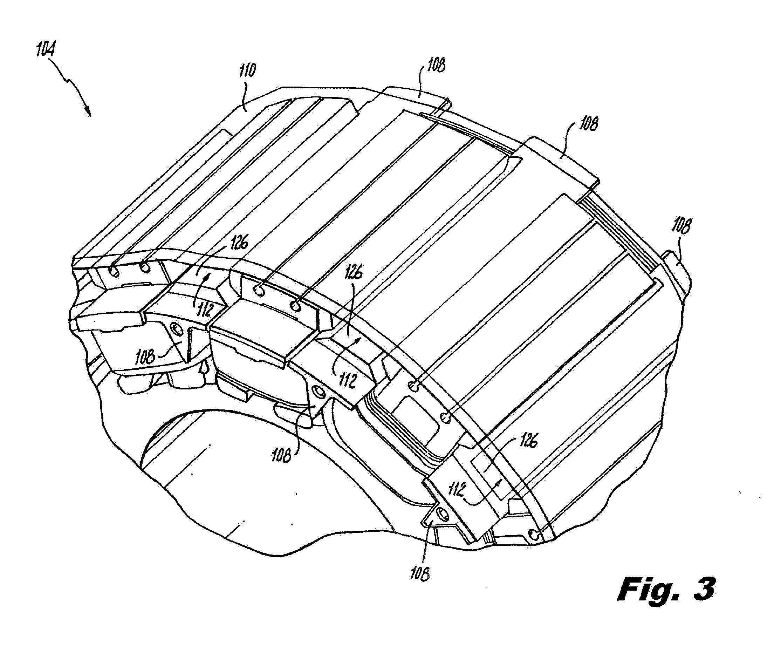

With reference again to Fig. 1, rotor core 106 defines an internal coolant passage for introduction of coolant for use in flow channels 112, i.e., a rotor shaft 116 is mounted axially aligned within the rotor core 106, and internal coolant passage 118 is defined within rotor shaft 116. A plurality of radial passages 120 in fluid communication between the internal coolant passage 118 and the flow channels 112 supply coolant from internal coolant passage 118 to the flow channels 112. A scavenge conduit 122 is in fluid communication between a sump portion 124 of housing 102 and internal coolant passage 118 for supplying coolant from sump portion 124 to rotor core 106. Rotor 104 draws coolant from sump portion 124, through scavenge conduit 122, and into the flow channels 112 by centrifugal force. As indicated schematically in Fig. 1, the ends of channels 112 are open to the space within housing 102 to serve as outlets for passage of coolant out of channels 112 for return of coolant to sump portion 124. The open ends 126 of channels 112 are shown in Fig. 3. Sleeve 110 is schematically depicted as transparent in Fig. 3, however those skilled in the art will readily appreciate that sleeve 110 can be made of any suitable material transparent or otherwise.

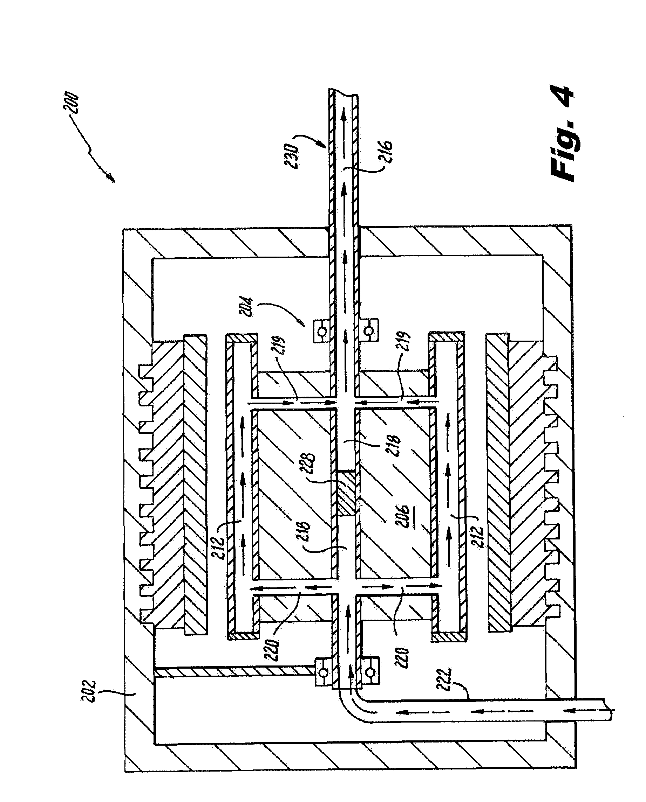

The sump configuration shown in Fig. 1 is exemplary only, and any other suitable coolant source can be used. For example, Fig. 4 shows another exemplary embodiment of an electrical machine 200, including a housing 202 and rotor 204 much as described above. Rotor core 206 includes a plurality of radial passages 220 draw coolant from coolant passage 218 in shaft 216 to flow channels 212. Coolant is supplied to coolant passage 218 from an external source through inlet conduit 222. Rather than centrifugally pumping coolant through rotor 204 to be released into housing 202, a plurality of radial return passages 219 are provided in fluid communication between the flow channels 212 and the internal coolant passage 218 for return of coolant from the flow channels 212 to internal coolant passage 218. A blockage 228 is provided in coolant passage 218 to route coolant through channels 212. Coolant exits rotor 204 through an outlet 230 in shaft 216.

The flow channels described herein provide for a flow of coolant in close proximity to the windings in an axial direction along substantially the entire length of the windings. This provides improved cooling compared to traditional rotor core cooling techniques. This can provide increases in rotor insulation life, rotor wedge and rotor core fatigue life, and an overall increase in machine reliability.

The methods and systems of the present disclosure, as described above and shown in the drawings, provide for electrical machines with superior properties including improved rotor cooling. While the apparatus and methods of the subject disclosure have been shown and described with reference to preferred embodiments, changes and/or modifications may be made thereto without departing from the scope of the subject disclosure as defined by the claims.

## Claims

1. A rotor (104; 204) for an electrical machine (100; 200) comprising:
a rotor core (106; 206) with a plurality of circumferentially spaced apart, axially extending wedges (108) mounted to the rotor core; and
a rotor sleeve (110) mounted radially outboard of the rotor core, wherein a respective flow channel (112) is defined between each wedge and the rotor sleeve for passage of coolant therethrough.

2. A rotor as recited in claim 1, wherein the rotor core bounds each flow channel circumferentially, for fluid isolation of the flow channels from one another in the circumferential direction.

3. A rotor as recited in claim 1 or 2, wherein rotor windings (114) are included between each wedge and the rotor core, wherein the wedge forms a thermal conduction path for heat exchange between the rotor windings and the flow channel.

4. A rotor as recited in any preceding claim, wherein the rotor core defines an internal coolant passage (118; 218) for introduction of coolant, and a plurality of radial passages (120) in fluid communication between the internal coolant passage and the flow channels for supplying coolant from the internal coolant passage to the flow channels.

5. A rotor as recited in claim 1, wherein a respective outlet is defined at an end of each flow channel for passage of coolant out of the flow channel.

6. An electrical machine (100; 200) comprising:
a housing (102; 202); and
the rotor (104; 204) according to any previous claim, wherein the rotor is mounted within the housing for rotation relative thereto.

7. An electrical machine as recited in claim 6, further comprising a rotor shaft (116; 216) axially aligned with the rotor core, wherein the internal coolant passage is defined within the rotor shaft.

8. An electrical machine as recited in claim 6 or 7. further comprising a plurality of return passages (219) in fluid communication between the flow channels and the internal coolant passage for return of coolant from the flow channels.

9. An electrical machine as recited in claim 6, further comprising a scavenge conduit (122); in fluid communication between a sump portion (124) of the housing and the internal coolant passage, wherein the rotor is configured to draw coolant from the sump portion through the scavenge conduit and into the flow channels by centrifugal force.
